# EUROPEAN PATENT APPLICATION

(11) **EP 4 480 323 A1**
(43) Date of publication of application: **25.12.2024**
(21) Application number: 23901781.7
(22) Date of filing: 26.05.2023
(51) Int. Cl.: A23L 2/02, A23L 2/80

(54) **SWEET FRUIT JUICE COMPOSITION AND PREPARATION METHOD THEREFOR**

(30) Priority: 06.05.2023 CN 202310503626
(71) Applicant: Guilin Layn Natural Ingredients Corp., Guilin, Guangxi 541199 (CN)
(72) Inventor: ZHAO, Jun, Guilin, Guangxi 541199 (CN); LI, Jie, Guilin, Guangxi 541199 (CN); SONG, Yunfei, Guilin, Guangxi 541199 (CN); YANG, Meiying, Guilin, Guangxi 541199 (CN)
(74) Representative: Sun, Yiming
(86) International application number: PCT/CN2023/096596
(87) International publication number: WO 2024/229903

(57) **Abstract**

The invention discloses a sweetened juice composition and a preparation method thereof. The preparation method of the sweetened juice composition in the invention includes the following steps: Break fresh Momordica grosvenori fruits, take flesh and juice, conduct flash extraction with acid water, then conduct flash extraction on the flesh with pure water at room temperature, and combine water extract and acid extract into total extract; concentrate the total extract to a certain BRIX at low temperature through a composite chromatographic column, OSD membrane and two different gel columns in order, and obtain a sweetened juice composition. The juice retains the active ingredients, is nutritious, and has a rich taste, a unique candied flavor and no lingering bitterness.

## Description

### Technical Field

The invention relates to a sweet composition, in particular to a sweetened juice composition and a preparation method thereof.

### Background Art

The existing Momordica grosvenori juice mainly includes fresh fruit juice and dried fruit juice. The sweet components of Momordica grosvenori mainly exist in the fruit flesh, and have low content in the peel and seed, which is almost negligible. The pigment substances of Momordica grosvenori mainly exist in the peel, are soluble in water and easily extracted. The epicarp contains some tannins, causing astringency. The dried fruit juice of Momordica grosvenori is dark and has a strong bitter and scorched taste. Fresh fruit juice includes rough dark juice and decolorized juice, rough juice only undergoes rough processing, has poor taste, and may precipitate or become turbid during use. The decolorized fruit juice is purified, but some nutrients are removed from the juice, reducing the nutritional effects in the purification process.

In view of this, it is necessary to develop a new method for making Momordica grosvenori juice that preserves all nutrients of Momordica grosvenori juice while achieving the color and taste close to the decolorized juice, thereby overcoming the defects of the prior art.

### Summary of the Invention

The first purpose of the invention is to provide a preparation method of a sweetened juice composition.

The first purpose of the invention is achieved through the following technical proposal: A preparation method of a sweetened juice composition includes the following steps:
(1) Break fresh Momordica grosvenori fruits, take flesh and juice, conduct flash extraction with 0.1-0.5% lemon water at 10-15 degrees C, place the flesh in a flash extractor, conduct flash extraction with pure water at room temperature for 3 times, and combine three water extracts and lemon water extract into total extract;
(2) Transfer the total extract to the composite column, elute with pure water, combine effluent and washing liquid, and obtain combined liquid 1;
(3) Filter the combined liquid 1 through an OSD membrane, pass the membrane filtering liquid through biophdex G-50 gel column, collect effluent and washing liquid, and obtain combined liquid 2;
(4) Pass the combined liquid 2 through biophdex G-20 gel column, collect effluent and washing liquid, and obtain combined liquid 3;
(5) Concentrate the combined liquid 3 to BRIX of 60-70 at low temperature, and sterilize.

In Step (1), the mass of the lemon water is 3-4 times that of the Momordica grosvenori.

In Step (1), the consumption of pure water each time is 1-1.5 times the mass of flesh. The extraction time is 3 minutes each time, and the flash extraction interval is 2 minutes.

In Step (2), a filler of the composite column consists of an upper layer of polyamides and a lower layer of activated carbon particles; the ratio of polyamides to activated carbon particles is 1:3-4; the ratio of the total mass of polyamides and activated carbon particles to the mass of Momordica grosvenori is 1:5-8.

In Step (2), the pure water used for elution is 1-1.5 times the total mass of polyamides and activated carbon particles.

In Step (3), the molecular weight of the OSD membrane is 10,000-20,000, and the inlet pressure is 290-870 psi.

In Step (3), the mass ratio of resin to raw materials is 1:4-5 during elution in biophdex G-50 gel column, and the pure water used for elution is 0.5-1 times the mass of resin.

In Step (4), the mass ratio of resin to raw materials is 1:2-4 during elution in biophdex G-20 gel column, and the pure water used for elution is 0.5-1 times the mass of resin.

The raw material refers to Momordica grosvenori.

The second purpose of the invention is to provide a sweet fruit juice composition.

In particular, the sweetened juice composition is prepared by the preparation method.

**The invention has the following beneficial effects:**
1. The fresh fruit flesh and juice are preferred. It is found that the total sugar and other nutrients of the peel and kernel account for a small percentage, and the taste of the juice will be affected if the whole fruit is extracted.
2. Low temperature flash extraction is used, and short time extraction enables all the nutrients of the juice to be retained. The composite polyamide and activated carbon column can effectively remove the bitter taste in the juice. The filler of the composite column consists of an upper layer of polyamides and a lower layer of activated carbon particles, the ratio of which is 1:3-4, the ratio of the total mass of polyamides and activated carbon particles to the mass of Momordica grosvenori is 1:5-8. The bitter taste of the solution can be effectively removed after passing through the column, which neither causes waste nor increases the production cost.
3. After filtering through the OSD membrane and purified through biophdex G-50 gel column and biophdex G-20 gel column, the purity and taste of the juice are optimized by separating the active ingredients and impurities. When dissolved into 1% solution, the composition prepared by the invention has a taste of preserved fruit and no lingering bitterness. The juice not purified by the two gel columns still has a bitter taste and no taste of preserved fruit.
4. Low temperature concentration ensures that active ingredients are not to be volatilized. The main components of the original juice are preserved to the maximum, and the obtained sweetened juice composition contains 15-35% total sugar, 0.5-10% mogroside V, 0.5-1% protein, 0.2-0.5% flavone and 0.5-1% vitamin C.
5. Only water is used throughout the process, which is safe, environmentally friendly and pollution-free. The process is simple, adaptable and suitable for mass production.
6. The obtained juice retains the nutrients of the whole juice, containing 15-35% total sugar, 0.5-10% mogroside V, 0.5-1% protein, 0.2-0.5% flavone and 0.5-1% vitamin C. The obtained juice also has pure taste and taste of preserved fruit, and is approximately colorless and suitable for food, beverage and other aspects.

### Detailed Description of the Invention

### Embodiment 1

Take and break 2,000 g of Momordica grosvenori, take flesh and juice (1,200 g), conduct flash extraction with 3X 0.2% lemon water at low temperature (12 degrees C), put the flesh into a flash extractor, use a pure water solvent as an extraction solvent, add 1X solvent each time, extract for 3 minutes at the motor speed of 12,000 R/min and at room temperature, and extract for 3 times, one minute each time. Take a 2-minute break between two extractions. Separate filtrate, and combine three water extracts and lemon water extract to obtain a total extract. Pass total filtrate through 300 g composite column for chromatography. The composite column consists of an upper layer of 60 g of polyamides and a lower layer of 240 g of activated carbon particles. Elute with 300 ml of pure water, collect effluent and washing liquid, and obtain combined liquid 1. Filter the combined liquid 1 through an OSD membrane, with molecular weight of 10,000 and the inlet pressure of 580 PSi. Collect the filtrate, pass the filtrate through 400 g biophdex G-50 gel column, elute with 400 ml of pure water, collect effluent and washing liquid, and obtain combined liquid 2. Directly pass the combined liquid 2 through 500 g biophdex G-20 gel column. Elute with 250 ml of pure water, collect effluent and washing liquid, and obtain combined liquid 3. Concentrate the combined liquid 3 in a low temperature concentrator (at temperature less than 45 degrees C) to BRIX of 65. Then heat to 75 degrees C, and sterilize for 15 minutes. The juice yield is 12.5%. After HPLC test, the juice contains 30% total sugar, 6% mogroside V, 0.6% protein, 0.3% flavone and 0.6% vitamin C.

When dissolved into a 1% solution, the composition has a taste of preserved fruit and no lingering bitterness.

### Comparative Example 1

Different from the embodiment 1, the ratio of the total mass of polyamides and activated carbon particles to the mass of raw materials is less than 1:8.

Pass the total filtrate through the composite column below 250 g for chromatography. The composite column consists of an upper layer of 50 g of polyamides and a lower layer of 200 g of activated carbon particles.

When dissolved into a 1% solution, the composition has a taste of preserved fruit and bitterness.

### Comparative Example 2

Different from the embodiment 1, the ratio of the total mass of polyamides and activated carbon particles to the mass of raw materials is more than 1:5.

Pass the total filtrate through the composite column above 400 g for chromatography. The composite column consists of an upper layer of 100 g of polyamides and a lower layer of 300 g of activated carbon particles.

When dissolved into a 1% solution, the composition has a taste of preserved fruit and no bitterness. However, large amount of resin will cause waste and increase production costs.

### Embodiment 2

Take and break 2,000 g of Momordica grosvenori, take flesh and juice (1,200 g), conduct flash extraction with 3X 0.1% lemon water at low temperature (11 degrees C), put the flesh into a flash extractor, use a pure water solvent as an extraction solvent, add 1X solvent each time, extract for 3 minutes at the motor speed of 10,000 R/min and at room temperature, and extract for 3 times, one minute each time. Take a 2-minute break between two extractions. Separate filtrate, and combine three water extracts and lemon water extract to obtain a total extract. Pass total filtrate through 250 g composite column for chromatography. The composite column consists of an upper layer of 50 g of polyamides and a lower layer of 200 g of activated carbon particles. Elute with 250 ml of pure water, collect effluent and washing liquid, and obtain combined liquid 1. Filter the combined liquid 1 through an OSD membrane, with molecular weight of 15,000 and the inlet pressure of 500 PSi. Collect the filtrate, pass the filtrate through 500 g biophdex G-50 gel column, elute with 400 ml of pure water, collect effluent and washing liquid, and obtain combined liquid 2. Directly pass the combined liquid 2 through 500 g biophdex G-20 gel column. Elute with 500 ml of pure water, collect effluent and washing liquid, and obtain combined liquid 3. Concentrate the combined liquid 3 in a low temperature concentrator (at temperature less than 45 degrees C) to BRIX of 64. Then heat to 72 degrees C, and sterilize for 14 minutes. The juice yield is 12.1%. After HPLC test, the juice contains 28% total sugar, 5% mogroside V, 0.5% protein, 0.25% flavone and 0.5% vitamin C.

When dissolved into a 1% solution, the composition has a taste of preserved fruit and no lingering bitterness.

### Embodiment 3

Take and break 2,000 g of Momordica grosvenori, take flesh and juice (1,200 g), conduct flash extraction with 4X 0.2% lemon water at low temperature (13 degrees C), put the flesh into a flash extractor, use a pure water solvent as an extraction solvent, add 1X solvent each time, extract for 3 minutes at the motor speed of 13,000 R/min and at room temperature, and extract for 3 times, one minute each time. Take a 2-minute break between two extractions. Separate filtrate, and combine three water extracts and lemon water extract to obtain a total extract. Pass total filtrate through 280 g composite column for chromatography. The composite column consists of an upper layer of 70 g of polyamides and a lower layer of 210 g of activated carbon particles. Elute with 300 ml of pure water, collect effluent and washing liquid, and obtain combined liquid 1. Filter the combined liquid 1 through an OSD membrane, with molecular weight of 16,000 and the inlet pressure of 480 PSi. Collect the filtrate, pass the filtrate through 400 g biophdex G-50 gel column, elute with 400 ml of pure water, collect effluent and washing liquid, and obtain combined liquid 2. Directly pass the combined liquid 2 through 800 g biophdex G-20 gel column. Elute with 800 ml of pure water, collect effluent and washing liquid, and obtain combined liquid 3. Concentrate the combined liquid 3 in a low temperature concentrator (at temperature less than 45 degrees C) to BRIX of 65. Then heat to 74 degrees C, and sterilize for 11 minutes. The juice yield is 13%. After HPLC test, the juice contains 31% total sugar, 7% mogroside V, 0.7 % protein, 0.35% flavone and 0.6% vitamin C.

When dissolved into a 1% solution, the composition has a taste of preserved fruit and no lingering bitterness.

### Embodiment 4

Take and break 2,000 g of Momordica grosvenori, take flesh and juice (1,200 g), conduct flash extraction with 4X 0.3% lemon water at low temperature (14 degrees C), put the flesh into a flash extractor, use a pure water solvent as an extraction solvent, add 1X solvent each time, extract for 3 minutes at the motor speed of 14,000 R/min and at room temperature, and extract for 3 times, one minute each time. Take a 2-minute break between two extractions. Separate filtrate, and combine three water extracts and lemon water extract to obtain a total extract. Pass total filtrate through 350 g composite column for chromatography. The composite column consists of an upper layer of 70 g of polyamides and a lower layer of 280 g of activated carbon particles. Elute with 400 ml of pure water, collect effluent and washing liquid, and obtain combined liquid 1. Filter the combined liquid 1 through an OSD membrane, with molecular weight of 17,000 and the inlet pressure of 600 PSi. Collect the filtrate, pass the filtrate through 450 g biophdex G-50 gel column, elute with 300 ml of pure water, collect effluent and washing liquid, and obtain combined liquid 2. Directly pass the combined liquid 2 through 600 g biophdex G-20 gel column. Elute with 600 ml of pure water, collect effluent and washing liquid, and obtain combined liquid 3. Concentrate the combined liquid 3 in a low temperature concentrator (at temperature less than 45 degrees C) to BRIX of 66. Then heat to 76 degrees C, and sterilize for 13 minutes. The juice yield is 13.5%. After HPLC test, the juice contains 32% total sugar, 8% mogroside V, 0.7 % protein, 0.35% flavone and 0.65% vitamin C.

When dissolved into a 1% solution, the composition has a taste of preserved fruit and no lingering bitterness.

### Embodiment 5

Take and break 2,000 g of Momordica grosvenori, take flesh and juice (1,200 g), conduct flash extraction with 4X 0.4% lemon water at low temperature (15 degrees C), put the flesh into a flash extractor, use a pure water solvent as an extraction solvent, add 1X solvent each time, extract for 3 minutes at the motor speed of 15,000 R/min and at room temperature, and extract for 3 times, one minute each time. Take a 2-minute break between two extractions. Separate filtrate, and combine three water extracts and lemon water extract to obtain a total extract. Pass total filtrate through 400 g composite column for chromatography. The composite column consists of an upper layer of 100 g of polyamides and a lower layer of 300 g of activated carbon particles. Elute with 500 ml of pure water, collect effluent and washing liquid, and obtain combined liquid 1. Filter the combined liquid 1 through an OSD membrane, with molecular weight of 18,000 and the inlet pressure of 650 PSi. Collect the filtrate, pass the filtrate through 450 g biophdex G-50 gel column, elute with 350 ml of pure water, collect effluent and washing liquid, and obtain combined liquid 2. Directly pass the combined liquid 2 through 800 g biophdex G-20 gel column. Elute with 800 ml of pure water, collect effluent and washing liquid, and obtain combined liquid 3. Concentrate the combined liquid 3 in a low temperature concentrator (at temperature less than 45 degrees C) to BRIX of 68. Then heat to 75 degrees C, and sterilize for 14 minutes. The juice yield is 13.6%. After HPLC test, the juice contains 32% total sugar, 9.5% mogroside V, 0.8 % protein, 0.4% flavone and 0.8% vitamin C.

When dissolved into a 1% solution, the composition has a taste of preserved fruit and no lingering bitterness.

### Comparative Example 3

Take and break 2,000 g of Momordica grosvenori, take flesh and juice (1,200 g), conduct flash extraction with 3X 0.2% lemon water at low temperature (12 degrees C), put the flesh into a flash extractor, use a pure water solvent as an extraction solvent, add 1X solvent each time, extract for 3 minutes at the motor speed of 12,000 R/min and at room temperature, and extract for 3 times, one minute each time. Take a 2-minute break between two extractions. Separate filtrate, and combine three water extracts and lemon water extract to obtain a total extract. Pass total filtrate through 600 g composite column for chromatography. The composite column consists of an upper layer of 120 g of polyamides and a lower layer of 480 g of activated carbon particles. Elute with 600 ml of pure water, combine and collect effluent and washing liquid. Filter through an OSD membrane, with molecular weight of 10,000 and the inlet pressure of 580 PSi. Collect the filtrate, Concentrate to BRIX of 65. Heat to 75 degrees C, and sterilize for 15 minutes. The juice yield is 14.5%. After HPLC test, the juice contains 26% total sugar, 5.4% mogroside V, 0.55 % protein, 0.28% flavone and 0.56% vitamin C.

When dissolved into a 1% solution, the composition has lingering bitterness and no taste of preserved fruit.

The invention is further described in detail in combination with examples and drawings below, but the embodiments of the invention are not limited to this. According to the above content of the invention, other forms of modifications, substitutions or changes can be made on the basis of the general technical knowledge and conventional means in the field without deviation from the basic technical ideas of the invention.

## Claims

1. A preparation method of a sweetened juice composition, **characterized by** including the following steps:
(1) Break fresh Momordica grosvenori fruits, take flesh and juice, conduct flash extraction with 0.1-0.5% lemon water at 10-15 degrees C, place the flesh in a flash extractor, conduct flash extraction with pure water at room temperature for 3 times, and combine three water extracts and lemon water extract into total extract;
(2) Transfer the total extract to the composite column, elute with pure water, combine effluent and washing liquid, and obtain combined liquid 1;
(3) Filter the combined liquid 1 through an OSD membrane, pass the membrane filtering liquid through biophdex G-50 gel column, collect effluent and washing liquid, and obtain combined liquid 2;
(4) Pass the combined liquid 2 through biophdex G-20 gel column, collect effluent and washing liquid, and obtain combined liquid 3;
(5) Concentrate the combined liquid 3 to BRIX of 60-70 at low temperature, and sterilize.

2. The preparation method of the sweetened juice composition according to claim 1, **characterized in that** in Step (1), the mass of the lemon water is 3-4 times that of the Momordica grosvenori.

3. The preparation method of the sweetened juice composition according to claim 1, **characterized in that** in Step (1), the consumption of pure water each time is 1-1.5 times the mass of flesh; the flash extraction interval is 2 minutes.

4. The preparation method of the sweetened juice composition according to claim 1, **characterized in that** in Step (2), a filler of the composite column consists of an upper layer of polyamides and a lower layer of activated carbon particles; the ratio of polyamides to activated carbon particles is 1:3-4; the ratio of the total mass of polyamides and activated carbon particles to the mass of Momordica grosvenori is 1:5-8.

5. The preparation method of the sweetened juice composition according to claim 1, **characterized in that** in Step (2), the pure water used for elution is 1-1.5 times the total mass of polyamides and activated carbon particles.

6. The preparation method of the sweetened juice composition according to claim 1, **characterized in that** in Step (3), the molecular weight of the OSD membrane is 10,000-20,000, and the inlet pressure is 290-870 psi.

7. The preparation method of the sweetened juice composition according to claim 1, **characterized in that** in Step (3), the mass ratio of resin to Momordica grosvenori is 1:4-5 during elution in biophdex G-50 gel column, and the pure water used for elution is 0.5-1 times the mass of resin.

8. The preparation method of the sweetened juice composition according to claim 1, **characterized in that** in Step (4), the mass ratio of resin to Momordica grosvenori is 1:2-4 during elution in biophdex G-20 gel column, and the pure water used for elution is 0.5-1 times the mass of resin.

9. A sweetened juice composition prepared by the preparation method of the sweetened juice composition according to any of claims 1-8.
